# FASCICULE DE BREVET EUROPEEN

(11) **EP 0 537 067 B1**
(45) Date de publication et mention de la délivrance du brevet: **19.06.1996**
(21) Numéro de dépôt: 92402735.2
(22) Date de dépôt: 08.10.1992
(51) Int. Cl.: B60J 10/02

(54) **Vitrage automobile prééquipé d'un cadre en élastomère**
Fahrzeugverglasung mit einem vorgefertigten elastomerischen Formteil
Vehicle glazing pre-assembled with an elastomeric frame

(30) Priorité: 11.10.1991 DE 4133662
(43) Date de publication de la demande: 14.04.1993
(73) Titulaire: SAINT-GOBAIN VITRAGE, F-92400 Courbevoie (FR); VEGLA Vereinigte Glaswerke GmbH, D-52066 Aachen (DE)
(72) Inventeur: Cornils, Gerd, W-5161 Merzenich-Girbelsrath (DE); Kotte, Rolf, W-5110 Alsdorf Begau (DE); Kunert, Heinz, W-5000 Köln 41 (DE)
(74) Mandataire: Breton, Jean-Claude

(56) Documents cités:
- EP-A- 0 421 833
- FR-A- 2 534 924

## Description

L'invention concerne un vitrage prééquipé d'un cadre élastomère en particulier un vitrage automobile. Elle concerne par ailleurs un procédé de fabrication d'un tel vitrage.

Le montage d'un vitrage dans la baie d'une carrosserie peut s'effectuer soit par une méthode de collage soit par fixation mécanique d'un cadre en caoutchouc. La méthode de collage utilise le dépôt d'un cordon de colle à la périphérie du vitrage, le cordon servant ensuite à la fixation sur la tôle de la baie. Dans la technique qui utilise un cadre en caoutchouc on équipe le bord du vitrage d'un cadre préfabriqué qui recouvre le bord du vitrage sur trois côtés. Le profilé comporte non seulement une rainure dans laquelle se trouve le bord du vitrage mais également une deuxième rainure destinée à permettre la fixation du cadre au bord de la tôle de la baie.

Alors que la méthode par collage permet très simplement d'avoir une continuité entre le vitrage et la tôle de la carrosserie ce qui autorise de très bons coefficients de pénétration dans l'air, les cadres en caoutchouc quant à eux possèdent obligatoirement une aile qui vient recouvrir le vitrage ce qui rend plus difficile et/ou moins efficace la réalisation d'un ensemble aérodynamique convenable. C'est pourquoi lorsqu'on désire une carrosserie bien profilée on est obligé de faire appel à la technique de collage.

Mais la technique de collage possède également un inconvénient majeur, celui des problèmes liés au démontage du vitrage. Ces difficultés n'apparaissent pas seulement lorsqu'il s'agit de remplacer un vitrage cassé ou inutilisable mais également chaque fois que se pose le problème du recyclage des véhicules usagés. Dans ce cas, il existe un intérêt majeur à ce que les méthodes de montage des vitrages permettent également un démontage aisé de manière que les éléments d'une automobile de différentes origines puissent être recyclés séparément.

Il est connu de la demande de brevet FR-2 534 924 un procédé de liaison par moulage de caoutchouc sur le verre consistant à produire une liaison chimique moléculaire entre caoutchouc et verre pendant la conformation dimensionnelle du caoutchouc et sa transformation simultanée de la phase plastique à la phase élastique. Ce document illustre différentes configurations entre verre et éléments de caoutchouc destinés à coopérer avec des éléments métalliques en feuille associés.

Il est également connu de la demande de brevet EP-A-0 421 833 des vitrages destinés au collage direct dans le cadre de la baie d'une fenêtre, et qui sont pour ce faire équipés d'un cadre profilé obtenu par extrusion d'un polymère adapté à la surface du verre, ledit profilé étant muni d'un appendice qui sert d'élément de protection et de centrage des vitrages pendant la prise de la colle.

L'invention se donne pour tâche de fournir un vitrage prêt au montage et qui permette aussi bien d'avoir une continuité entre le vitrage et la tôle de la carrosserie que de permettre un montage et un démontage simplifié du vitrage.

Il est prévu que le vitrage soit prééquipé d'un cadre en élastomère placé exclusivement du côté du vitrage tourné vers la tôle de fixation de la baie sans recouvrir le bord du vitrage. Il est collé sur le vitrage et, selon l'invention, il comporte une rainure pour fixer le vitrage prééquipé par pincement sur la tôle.

L'invention a donc pour objet un vitrage prêt au montage, en particulier un vitrage automobile, prééquipé d'un cadre extrudé en élastomère qui est placé exclusivement sur le côté du vitrage tourné vers une tôle de fixation de la baie sans recouvrir le bord du vitrage, et qui comporte une lèvre d'étanchéité qui déborde du contour du vitrage et qui se plie lors du positionnement du vitrage dans la baie de carrosserie (Vitrage du type divulgué dans EP-A-0 421 833). Selon l'invention, le cadre extrudé comporte, dans sa section non-débordante qui se trouve donc exclusivement sur le côté du vitrage tourné vers la tôle de fixation, une rainure pour fixer le vitrage par pincement sur ladite tôle.

Un vitrage prééquipé selon la solution de l'invention présente les avantages des deux méthodes de pose antérieures sans avoir leurs inconvénients. En particulier, un tel vitrage se monte et se démonte aussi facilement que le vitrage antérieur équipé du cadre en caoutchouc. En plus, cette solution présente une étanchéité meilleure puisque seule la tôle de la carrosserie est enchâssée dans le joint tandis que le vitrage lui est étroitement lié par collage. D'un autre côté, l'invention permet de réaliser des vitrages qui, une fois posés, présentent une continuité aérodynamique avec le reste de la carrosserie et cela sans faire appel au collage complet. On évite ainsi les opérations fastidieuses qui accompagnent normalement le collage du parebrise dans la carrosserie tels que le nettovage et le primage du verre juste avant le dépôt du cordon de colle et la fixation provisoire du pare-brise par rapport à la carrosserie en attendant la prise de la colle.

Tous ces avantages montrent que le vitrage de l'invention constitue une solution élégante et bon marché au problème du vitrage d'une automobile moderne.

Pour fabriquer un vitrage prêt à la pose conforme à l'invention, une des méthodes consiste à obtenir le cadre par l'extrusion d'un élastomère extrudable et adhérant au verre après préparation adaptée de la surface, à l'aide d'une buse d'extrusion dont la section correspond au profil du cadre et qui dépose l'élastomère directement du côté du vitrage opposé à la tôle de fixation de la baie. L'élastomère est de préférence thermofusible avec une dureté Shore A après durcissement de 55 à 80 et de préférence de 58 à 62.

Il serait en principe possible de choisir comme élastomères des polymères à deux composants tels que des polyuréthanes mais les élastomères thermoplastiques sont particulièrement bien adaptés. En effet, tandis que les systèmes de polymères réactifs présentent rarement les qualités nécessaires pour non seulement adhérer de manière permanente à la surface du verre mais pour en plus posséder une rapidité de prise telle qu'ils gardent leur forme avec les rainures et les lèvres immédiatement après le dépôt du polymère à la sortie de la buse d'extrusion, les élastomères thermoplastiques présentent, eux, de ces points de vue de nombreux avantages. En effet, avec eux il est plus simple de conduire la fabrication de manière telle que les produits extrudés juste après avoir quitté la buse se figent immédiatement suffisamment pour que la forme extrudée corresponde à la forme définitive.

Dans le cadre de l'invention des élastomères thermoplastiques à base de polyuréthanes se sont avérés particulièrement intéressants, ainsi une polyoléfine thermoplastique et un élastomère formant une structure interpénétrée, en particulier une polyoléfine isotactique telle qu'un polypropylène chargé EPDM se sont montrés très efficaces. C'est le cas du produit Santoprène de la Société Monsanto. Les produits de ce type qui ont une température de travail entre 180 et 230°C et une dureté Shore A après durcissement de 60 donnent satisfaction, en particulier ils adhèrent parfaitement sur le verre.

Des détails et des avantages de l'invention sont résumés dans les revendications dépendantes et découlent de la description de l'invention avec les dessins qui présentent ses modes de réalisation préférés :
Les figures montrent :
- figure 1 : un vitrage automobile prééquipé selon l'invention selon une coupe au niveau du cadre,
- figure 2 : un mode de réalisation du cadre de l'invention avec une lèvre d'étanchéité,
- figure 3 : une autre forme de réalisation du cadre de l'invention,
- figure 4 : une installation pour mettre en oeuvre l'invention et,
- figure 5 : une vue agrandie d'une tête d'extrusion.

Les différents modes de réalisation présentés montrent le cadre de l'invention qui équipe un vitrage de sécurité monolithique 1 pour le fixer à la tôle 2 de la baie. A la place du vitrage monolithique on peut utiliser aussi bien des verres feuilletés ou des vitrages équipés intérieurement d'une feuille plastique tels qu'on les utilise communément pour les parebrises.

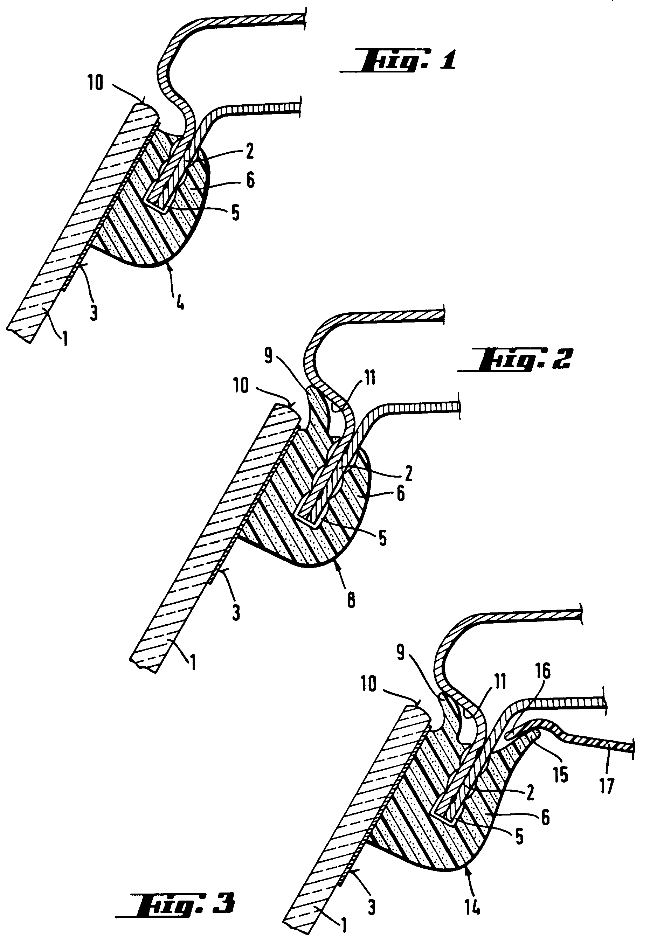

Les figures 1 à 3 montrent chacune une coupe verticale de la partie haute du vitrage en place dans la baie. Sur la surface au bord du vitrage 1, du côté intérieur du véhicule se trouve une couche 3 en forme de cadre faite d'un matériau opaque, de préférence à base d'émail. Cette couche 3 protège l'interface du cadre 4 et du verre de l'action des rayons ultraviolets. Le cadre 4 est un polymère élastique, il est collé de manière durable avec la surface du verre ou avec la couche 3 en émail.

Les propriétés physiques et les conditions de mise en oeuvre du polymère servant pour faire le cadre doivent être comparables à celles d'un cadre conventionnel fait d'un caoutchouc de monomère d'éthylène-propylène-diène (EPDM). En particulier la dureté Shore A du polymère doit être de préférence comprise entre 55 et 80 et de même les propriétés mécaniques doivent être telles que le cadre qui enchâsse le bord de la tôle 2 assure une tenue suffisante pour que le vitrage lors d'un accident respecte les conditions imposées en cas de projection d'un passager sur le parebrise. Par ailleurs, l'élastomère utilisé doit présenter une bonne résistance aux huiles et aux carburants ainsi qu'une tenue en température satisfaisante. En effet, il faut que la tenue mécanique soit garantie même pour des températures qui peuvent atteindre 100°C. Toutes ces conditions rendent délicat le choix du polymère adapté au problème. C'est ainsi que par exemple les polymères à base de polyuréthane monocomposant qui polymérisent avec l'humidité de l'air de même que les bicomposants, à cause de leur trop faible dureté, ne conviennent pas. En revanche, comme on l'a vu plus haut, des systèmes d'élastomère thermoplastiques se sont montrés adaptés.

Pour pouvoir équiper dans des conditions économiquement intéressantes des vitrages automobiles avec le cadre de l'invention, il faut non seulement que le polymère retenu respecte les conditions précédentes mais on préfère de plus qu'il soit compatible avec une extrusion haute pression directement sur le vitrage. Il doit de plus présenter de bonnes propriétés d'adhérence sur le verre.

Le cadre 4 possède une section de base en forme de U. La rainure 5 comprise entre les deux branches du U se trouve dirigée parallèlement à la surface du verre. Lorsque le vitrage est posé, c'est elle qui enchâsse la tôle 2 de la baie. La pose du vitrage équipé de la sorte se passe de la manière habituelle, c'est-à-dire qu'on dépose dans la rainure 5 une cordelette. Au moment de la pose en tirant progressivement sur la cordelette, on permet à la nervure 6 du cadre de venir chevaucher le bord de la tôle 2.

Le cadre 8 présenté figure 2 se différencie du cadre précédent par le fait qu'il possède une lèvre d'étanchéité 9 supplémentaire. La lèvre 9 s'appuie au moment de la pose dans la baie à la périphérie 11 de celle-ci qui se trouve opposée au pourtour 10 du vitrage. La lèvre 9 peut ainsi boucher l'espace périphérique.

Sur l'exemple présenté figure 3 on voit également le cadre 14 équipé d'une lèvre 9 qui vient remplir l'espace entre le pourtour 10 du vitrage et la paroi périphérique 11 de la baie. En plus, ici, le cadre 14 possède en prolongation de la nervure 6 une autre lèvre 15. Cette lèvre 15 se trouve elle aussi au moment de la pose à l'aide d'une cordelette, soulevée en même temps que la nervure 6 du profilé pour "passer" le bord de la tôle 2 et venir ainsi se superposer à la garniture du toit 17. Ce système permet ainsi d'établir une liaison continue entre le plafond de l'habitacle et le vitrage.

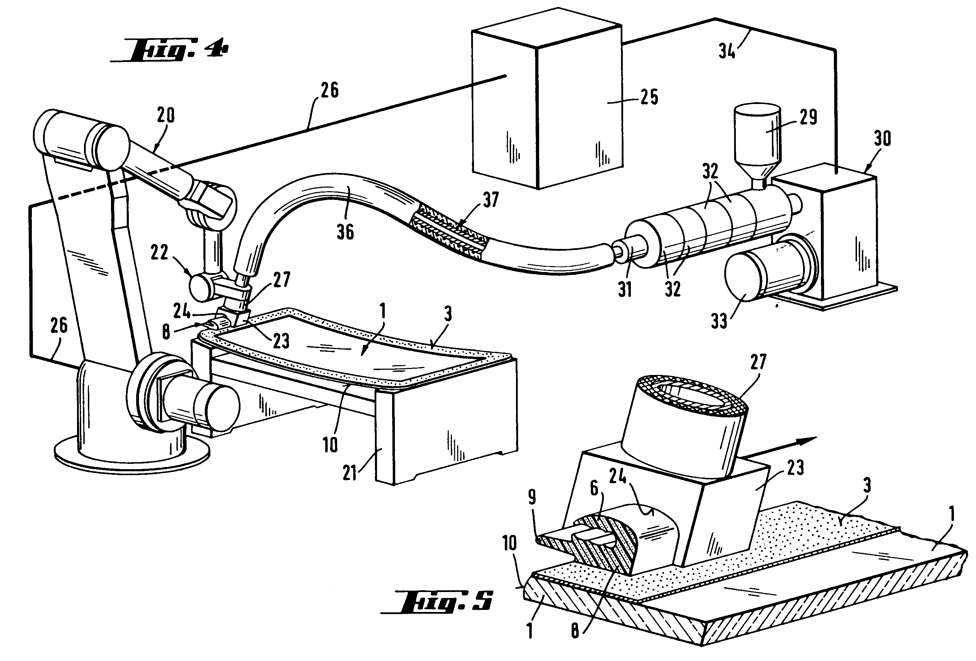

On a vu que pour équiper le vitrage du cadre conforme à l'invention on préfèrait utiliser une technique d'extrusion directement à la périphérie du vitrage. C'est celle-ci qui est représentée figures 4 et 5 où l'on voit une installation pour prééquiper le vitrage de l'invention. Le vitrage 1 à la périphérie duquel doit être placé le cadre spécial possède dans cette zone du côté intérieur une couche 3 en forme de cadre en un matériau opaque, de préférence en émail. Cette couche aura par exemple été cuite au moment du bombage. Dans un premier temps, on nettoie soigneusement la couche 3 puis on y dépose un promoteur d'adhérence. Comme primaire on utilise de préférence un polyuréthane bicomposant modifié en phase solvant. Comme solvant on peut utiliser le trichloréthylène, le 1,1,1-trichloréthane ou un chlorure de méthylène. Les produits X 8310 de chez Henkel ou AK 290 de chez Kömmerling conviennent.

Le vitrage ainsi préparé est posé avec soin sur une table 21 dans le domaine d'action du robot 20. La "main" 22 du robot 20 soutient une tête d'extrusion 23. Celle-ci possède une buse 24 calibrée dont la section est celle du profilé à obtenir (figure 5). La tête d'extrusion 23 est déplacée par le robot 20 le long du bord du vitrage 1 selon un programme préétabli. Les ordres sont fournis par un centre de commande 25 par l'intermédiaire des liaisons 26. La tête d'extrusion 23 possède un chauffage 27 qui permet de maintenir la température de l'élastomère thermoplastique à une valeur d'environ 200°C nécessaire à l'extrusion.

L'élastomère thermoplastique est introduit sous forme de granulés dans la trémie d'alimentation 29 d'une extrudeuse à vis 30. Il y est fondu et en est expulsé à très forte pression par la tête d'extrusion 23. Le cylindre 31 où se trouve la vis est chauffé par plusieurs colliers chauffants 32. Ainsi, le cylindre 31 et tout se qui s'y trouve sont maintenus en température. Le moteur 33 de l'extrudeuse à vis 30 est commandé par la liaison 34 depuis le centre de commande 25.

La liaison entre le cylindre 31 de l'extrudeuse 30 et la tête d'extrusion 23 est réalisée par un flexible haute pression 36 chauffé électriquement. Le flexible 36 doit pouvoir subir des pressions d'au moins 250 bars. Il est équipé d'enroulements électriques 37 qui permettent de le maintenir à une température d'environ 200°C. De plus, le flexible 36 doit avoir une souplesse suffisante pour suivre sans réaction la tête d'extrusion 23 dans tous ses déplacements.

Le dispositif précédent permet par exemple d'extruder sous haute pression le produit Santoprène A (type 111-64) de la Société Monsanto à la périphérie d'un vitrage équipé d'un promoteur d'adhérence pour y déposer un profilé 8. On a représenté le profilé 8 avec une lèvre 9 qui déborde de la périphérie 10 du vitrage. Au moment où l'on positionne le vitrage équipé de son profilé périphérique dans la baie de la carrosserie la lèvre 9 se plie et protège ainsi le bord du verre en évitant un contact avec la tôle, il sert également à centrer le vitrage dans la baie et enfin il remplit l'espace resté libre entre la périphérie 10 du vitrage et la paroi 11 de la baie. Cette dernière fonction peut être également remplie par un profilé creux.

## Revendications

1. Vitrage (1) prêt au montage, en particulier vitrage automobile, prééquipé d'un cadre extrudé (4 - 8 - 14) en élastomère, qui est placé exclusivement sur le côté du vitrage (1) tourné vers une tôle de fixation (2) de la baie sans recouvrir le bord du vitrage, et qui comporte une lèvre d'étanchéité (9) qui déborde du contour (10) du vitrage et qui se plie lors du positionnement du vitrage dans la baie de la carrosserie, **caractérisé en ce que** le cadre extrudé (4 - 8 - 14) comporte, dans sa section non-débordante qui se trouve exclusivement sur le côté du vitrage tourné vers la tôle de fixation, une rainure (5) pour fixer le vitrage (1) par pincement sur la tôle (2).

2. Vitrage prêt au montage selon la revendication 1, **caractérisé en ce que** le cadre en élastomère (14) comporte une nervure (15) dirigée du côté de l'habitacle.

3. Vitrage prêt au montage selon l'une des revendications 1 à 2, **caractérisé en ce qu'**une cordelette est introduite dans la rainure (5) pour faciliter la pose du vitrage.

4. Procédé pour fabriquer un vitrage (1) prêt au montage selon l'une des revendications 1 à 3, **caractérisé en ce que** le cadre (4 - 8 - 14) est obtenu à partir d'un élastomère extrudable et adhérant au verre, après préparation adaptée de la surface, à l'aide d'une buse d'extrusion (24) dont la section correspond au profil du cadre et qui dépose l'élastomère directement du côté du vitrage opposé à la tôle de fixation de la baie.

5. Procédé selon la revendication 4, **caractérisé en ce que** l'on utilise pour l'extrusion un élastomère qui possède après durcissement une dureté Shore A comprise entre 55 et 80 et de préférence entre 58 et 62.

6. Procédé selon la revendication 4 ou 5, **caractérisé en ce que** l'on utilise pour l'extrusion du cadre (4 - 8 - 14) un élastomère thermoplastique à base d'un système polyuréthane.

7. Procédé selon la revendication 4 ou 5, **caractérisé en ce que** pour la fabrication par extrusion du cadre (4 - 8 - 14) on utilise comme élastomère thermoplastique une polyoléfine thermoplastique et un élastomère formant une structure interpénétrée, en particulier une polyoléfine isotactique telle qu'un polypropylène chargé EPDM.

## Claims

1. Glazing (1) ready for installation, particularly car glazing, preequipped with an extruded elastomer frame (4-8-14), which is exclusively placed on the side of the glazing (1) facing towards the fixing flange (2) of the opening without covering the edge of the glazing, and which has a lipseal (9) projecting beyond the glazing contour (10) and which is folded during the positioning of the glazing in the opening of the body, characterized in that the extruded frame (4-8-14) has, in its non-projecting section exclusively located on the side of the glazing turned towards the fixing flange, a groove (5) for fixing the glazing (1) by clipping on the sheet (2).

2. Glazing which is ready for installation according to claim 1, characterized in that the elastomer frame (14) has a rib (15) directed towards the side of the passenger compartment.

3. Glazing which is ready for installation according to one of the claims 1 and 2, characterized in that a small cord is introduced into the groove (5) to facilitate installation of the glazing.

4. Process for the production of a glazing (1) ready for installation according to one of the claims 1 to 3, characterized in that the frame (4-8-14) is obtained from an extrudable elastomer adhering to the glass, following an appropriate surface preparation, using an extrusion die (24), whose section corresponds to the profile of the frame and which deposits the elastomer directly on the side of the glazing opposite to the fixing flange of the opening.

5. Process according to claim 4, characterized in that, for extrusion purposes, use is made of an elastomer having after hardening a Shore A hardness between 55 and 80 and preferably between 58 and 62.

6. Process according to claim 4 or 5, characterized in that use is made, for the extrusion of the frame (4-8-14), of a thermoplastic elastomer based on a polyurethane system.

7. Process according to claim 4 or 5, characterized in that for the production by extrusion of the frame (4-8-14), the thermoplastic elastomer used is a thermoplastic polyolefin and an elastomer forming an interpenetrated structure, particularly an isotactic polyolefin such as an EPDM charged polypropylene.

## Patentansprüche

1. Einbaufertige Glasscheibe (1), insbesondere Autoglasscheibe, die mit einem extrudierten Rahmen (4-8-14) aus einem Elastomer vorgerüstet ist, der ohne den Rand der Glasscheibe zu übergreifen ausschließlich auf der dem Befestigungsflansch (2) des Fensterrahmens zugewandten Seite der Glasscheibe (1) angeordnet ist und eine über die Umfangsfläche (10) der Glasscheibe überstehende und sich beim Einsetzen der Glasscheibe in den Fensterrahmenfalz der Karosserie umbiegende Dichtlippe (9) aufweist, **dadurch gekennzeichnet**, daß der extrudierte Rahmen (4-8-14) in dem nicht überstehenden Abschnitt, der sich ausschließlich auf der dem Befestigungsflansch zugewandten Seite der Glasscheibe befindet, eine Nut (5) für die Klemmbefestigung der Glasscheibe (1) auf dem Befestigungsflansch (2) umfaßt.

2. Einbaufertige Glasscheibe nach Anspruch 1, dadurch gekennzeichnet, daß der aus einem Elastomer bestehende Rahmen (14) eine zum Fahrgastraum hin gerichtete Lippe (15) umfaßt.

3. Einbaufertige Glasscheibe nach Anspruch 1 oder 2, dadurch gekennzeichnet, daß zur Erleichterung des Einbauvorgangs der Glasscheibe in die Nut (5) eine Schnur eingelegt ist.

4. Verfahren zur Herstellung einer einbaufertigen Glasscheibe (1) nach einem der Ansprüche 1 bis 3, dadurch gekennzeichnet, daß der Rahmen (4-8-14) aus einem an dem Glas haftenden extrudierfähigen Elastomer nach geeigneter Vorbereitung der Glasoberfläche mit Hilfe einer im Querschnitt dem Rahmenprofil entsprechenden Extrusionsdüse (24) hergestellt wird, mit der das Elastomer unmittelbar auf der dem Befestigungsflansch des Fensterrahmens zugewandten Seite der Glasscheibe abgelegt wird.

5. Verfahren nach Anspruch 4, dadurch gekennzeichnet, daß für die Extrusion ein Elastomer verwendet wird, das nach dem Aushärten eine Shore-A-Härte von 55 bis 80, und vorzugsweise von 58 bis 62, aufweist.

6. Verfahren nach Anspruch 4 oder 5, dadurch gekennzeichnet, daß für die Extrusion des Rahmens (4-8-14) ein thermoplastisches Elastomer auf Basis eines Polyurethan-Systems verwendet wird.

7. Verfahren nach Anspruch 4 oder 5, dadurch gekennzeichnet, daß für die Herstellung des Rahmens (4-8-14) durch Extrusion als thermoplastisches Elastomer ein thermoplastisches Polyolefin und ein Elastomer mit sich gegenseitig durchdringender Struktur verwendet wird, insbesondere ein isotaktisches Polyolefin wie Polypropylen und EPDM.
